Europäisches Patentamt

**(19)** European Patent Office

Office européen des brevets

**(11)** **EP 0 796 143 B1**

**(12)** **FASCICULE DE BREVET EUROPEEN**

**(45)** Date de publication et mention
de la délivrance du brevet:
**07.10.1998 Bulletin 1998/41**

**(51)** Int. Cl.$^6$: **B01J 19/00**, B01J 3/00,
A62D 3/00

**(21)** Numéro de dépôt: **95941765.0**

**(22)** Date de dépôt: **05.12.1995**

**(86)** Numéro de dépôt international:
**PCT/FR95/01600**

**(87)** Numéro de publication internationale:
**WO 96/17680 (13.06.1996 Gazette 1996/27)**

**(54) PROCEDE EN MILIEU REDUCTEUR DE TRANSFORMATION CHIMIQUE DE STRUCTURES CHIMIQUES COMPLEXES DANS UN FLUIDE SUPERCRITIQUE**

VERFAHREN ZUR UMWANDLUNG VON KOMPLEXEN CHEMISCHEN STRUKTUREN UNTER REDUZIERENDEN BEDINGUNGEN IN EINEM SUPERKRITISCHEN FLUID

METHOD FOR THE CHEMICAL CONVERSION OF COMPLEX CHEMICAL STRUCTURES UNDER REDUCING CONDITIONS IN A SUPERCRITICAL FLUID

**(84)** Etats contractants désignés:
**AT BE CH DE DK FR GB IT LI NL SE**

**(30)** Priorité: **06.12.1994 FR 9414664**

**(43)** Date de publication de la demande:
**24.09.1997 Bulletin 1997/39**

**(73)** Titulaires:
• **L'ELECTROLYSE**
**33360 Latresne (FR)**
• **Sentagnes, Dominique**
**33000 Bordeaux (FR)**

**(72)** Inventeurs:
• **SENTAGNES, Dominique**
**F-33000 Bordeaux (FR)**

• **BERDEU, Bernard**
**F-33140 Villenave d'Oron (FR)**
• **DEMAZEAU, Gérard**
**F-33171 Gradignan Cédex (FR)**
• **GARRABOS, Yves**
**F-33600 Pessac (FR)**
• **LARGETEAU, Alain**
**F-33610 Cestas (FR)**

**(74)** Mandataire:
**Dubois-Chabert, Guy et al**
**Société de Protection des Inventions**
**25, rue de Ponthieu**
**75008 Paris (FR)**

**(56)** Documents cités:
**EP-A- 0 157 339**      **WO-A-92/18426**
**US-A- 5 118 447**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

**Description**

Domaine technique

La présente invention concerne de façon générale un procédé de transformation de structures chimiques complexes dans un fluide supercritique.

On entend par structure chimique complexe tout édifice chimique, c'est-à-dire toute association d'atomes ou de molécules, qui peut être soit solide, liquide ou gazeux. La structure chimique complexe peut être soit de nature organique telle que par exemple des huiles lourdes ou des composés aromatiques, soit de nature inorganique ou minérale telle que par exemple des nitrates, des acétates métalliques, des boues d'hydroxydes...

De même, la transformation peut concerner soit une seule structure chimique ou une association de structures chimiques complexes. Dans ce cas particulier, un effet de synergie peut être mis en oeuvre, l'une des structures chimiques complexes pouvant jouer le rôle de catalyseur vis-à-vis de l'autre (ou de ses produits de dégradation).

L'invention trouve des applications dans des domaines très variés. Elle peut être appliquée par exemple à la modification de structures moléculaires en ingénierie moléculaire ou en pharmacologie. Elle peut aussi être appliquée à la dégradation d'effluents industriels, par exemple la dégradation de boues de désencrage ou des boues d'hydroxydes métalliques. L'invention peut être appliquée aussi à la destruction d'explosifs ou de produits dangereux, tels que par exemple les PCB (polychlorobiphényles). Un autre domaine encore peut être le recyclage de produits naturels tels que, par exemple les lisiers, les effluents de chais et ceux issus du traitement du lait.

Etat de la technique antérieur

De façon générale, les structures chimiques complexes peuvent être transformées, dégradées et séparées en phases gazeuses, liquides et/ou solides, au travers de procédés physico-chimiques mettant en jeu des systèmes polyphasés. Les fluides supercritiques présentent l'avantage au travers d'un système monophasé - état supercritique - de mieux contrôler le procédé de transformation de structure complexes.

Des traitements oxydants en milieu supercritique - principalement dans l'eau - ont été étudiés et développés. On peut citer à ce sujet le document (1) WO-A-81/00855 qui concerne le traitement de matériaux organiques dans de l'eau supercritique. Les produits obtenus lors de ce traitement sont essentiellement du monoxyde et du dioxyde de carbone. Ce document prévoit également d'utiliser des métaux capteurs d'hydrogène (Ni, Mo, Co, Pd, Pt) et leurs oxydes, comme catalyseurs du traitement.

De façon générale le caractère exothermique des réactions mises en jeu dans les traitements par oxydation, est, de façon connue, mis à profit dans l'entretien, tout au moins partiel du procédé de traitement. Ceci est le cas notamment lorsque le traitement est mis en oeuvre avec de l'eau supercritique dont la température critique est voisine de 374°C.

Les procédés de traitement par oxydation en milieu supercritique connus présentent cependant un certain nombre de limitations et d'effets désavantageux. Parmi ceux-ci, on peut relever tout d'abord le fait que la chaleur produite lors des traitements est difficilement stockable, ce qui à défaut de pouvoir la consommer directement sur place conduit à des pertes importantes en termes énergétiques. Par ailleurs, la dégradation ou la transformation des effluents aboutit en général à des produits peu valorisables ou pour le moins non directement valorisables, tels que $H_2O$, $CO_2$, $CO$ par exemple.

Un autre problème est celui de la corrosion et de la tenue mécanique des enceintes de traitement et plus généralement des moyens de confinement et des systèmes d'alimentation des enceintes. Ces dispositifs sont généralement réalisés en métaux ou en alliages sensibles au traitement oxydant.

Des traitements autres que les traitements mettant en jeu une oxydation en milieu supercritique sont connus par exemple du document EP-A-0 157 339 qui décrit un procédé permettant de préparer des hydrocarbures, de préférence saturés à partir de boues de station d'épuration ayant une teneur en eau de 70 à 98,5 %, par traitement de ces bornes à une température de 300 à 600°C et à une pression de 100 à 500 bars. Les boues, immédiatement après ce traitement à température et pression élevées, ou simultanément à ce traitement, subissent une hydrogénation avec addition d'hydrogène moléculaire, à raison de 2 à 25 % en poids, obligatoirement en présence d'un catalyseur. On abaisse ensuite par étapes la température et la pression pour séparer la phase gazeuse en diverses fractions.

Le document US-A-5 118 447 concerne un procédé de dénitrification de composés azotés, en particulier de nitrates et de nitrites présents dans de nombreux effluents aqueux industriels issus par exemple de l'industrie chimique, des industries du traitement de surface, des industries des explosifs et des munitions. Ce procédé comprend les étapes consistant à déterminer la concentration en nitrates et en nitrites présents dans un effluent, à induire dans cet effluent la présence de formate en tant que réducteur des nitrates et nitrites, à chauffer le mélange à une température de 200 à 600°C et à une pression suffisante pour maintenir l'effluent liquide dans un domaine monophasique soit liquide, soit supercritique, pendant un temps de séjour suffisant pou réduire la teneur en nitrates et en nitrites et donner essentiellement de l'azote, du gaz carbonique, et des carbonates et bicarbonates. On se place donc dans un domaine de pression et de température très restreint et très proche de la limite du domaine supercritique qui peut même laisser l'effluent à traiter à l'état liquide dans un domaine subcritique.

Un but de la présente invention est de proposer de façon très générale un procédé de transformation de structures chimiques ne présentant pas les inconvénients et limitations des procédés évoqués ci-dessus.

Un autre but de la présente invention est de proposer un procédé de transformation de structures chimiques qui aboutisse directement, soit à des produits valorisables, soit à des produits dont les caractéristiques sont conformes aux normes de rejet dans le milieu naturel.

Un autre but encore de la présente invention est une transformation de structures chimiques qui ne soumette pas les enceintes et dispositifs de traitement à une action corrosive, ou qui tout au moins limite une telle action corrosive.

Enfin, plus précisément, un autre but de la présente invention est un procédé qui ne mette en oeuvre ni hydrogène moléculaire ni catalyseur, et qui permette, grâce au contrôle des paramètres tels que température, pression et paramètres chimiques, de piloter et d'orienter à volonté les réactions et les transformations se produisant dans le domaine supercritique du fluide ou milieu réactionnel afin d'obtenir à volonté les produits valorisables voulus.

Exposé de l'invention

Pour atteindre ces objectifs, l'invention concerne plus précisément un procédé de transformation chimique d'au moins un produit et/ou une structure chimique complexe en au moins un produit final, ladite transformation chimique comportant au moins une réaction de réduction dans un solvant à l'état supercritique, caractérisé en ce que l'on se situe tout au long du procédé constamment à l'intérieur du domaine exclusivement supercritique du milieu ou fluide réactionnel comportant au moins un produit et/ou une structure chimique complexe en solution ou en suspension dans le solvant, en ce que l'on réalise un pilotage de la transformation chimique à travers l'un ou plusieurs des différents domaines ou zones constituant le domaine supercritique en fonction du au moins un produit final que l'on souhaite préférentiellement obtenir, en agissant sur les conditions de température et de pression, et en contrôlant en outre les paramètres caractéristiques des conditions chimiques du milieu, et en ce que le procédé est réalisé sans apport d'hydrogène moléculaire et sans l'ajout du catalyseur allant de pair avec ledit apport d'hydrogène moléculaire.

Autrement dit, l'objectif de l'invention est de favoriser, au travers de réactions chimiques contrôlées, la dégradation d'effluents, de molécules ou de structures chimiques complexes, au moins une des étapes de ces réactions chimiques étant une réduction.

On entend par transformation chimique à la fois la dégradation de l'édifice moléculaire (ou atomique) de la ou des structures chimiques complexes, en une ou plusieurs structures chimiques avec un édifice moléculaire plus simple, et l'interaction chimique des édifices moléculaires plus ou moins complexes, entre eux, ou avec le solvant à l'état supercritique.

L'interaction chimique des édifices moléculaires se traduit par un ensemble de réactions ou de solubilisations dont une ou plusieurs sont des réductions.

On entend par phénomène de réduction toute réaction conduisant pour l'un des éléments de la structure chimique à dégrader, à un gain d'électrons.

On définit dans un premier temps, et pour l'essentiel, l'état supercritique, dans lequel ont lieu la ou les réductions, par rapport au solvant. A titre d'exemple, le solvant peut être de l'eau, un alcool tel que l'éthanol, un mélange eau-alcool, ou tout autre solvant approprié. Son choix dépend essentiellement des structures chimiques que l'on souhaite transformer.

De plus, en s'appuyant d'une part sur les propriétés physico-chimiques spécifiques des fluides supercritiques et, d'autre part, sur les conditions réductrices permettant de sauvegarder certaines fonctions pour les produits finaux résultant de la transformation, il est possible selon les structures à traiter d'aboutir simplement à la dégradation, ou à la formation de composés valorisables, comme cela apparaît dans la suite de la description.

Selon l'invention, de manière générale, les milieux supercritiques ont été utilisés afin d'accroître la réactivité "in-situ" et selon un aspect spécifique de la présente invention, de mieux contrôler les réactions chimiques pouvant se développer dans le milieu.

Selon la nature particulière des structures chimiques que l'on souhaite transformer, la mise en oeuvre du procédé peut être adaptée.

Dans une première mise en oeuvre du procédé, celui-ci peut comporter les étapes suivantes :

a) - formation d'un fluide réactionnel comportant la (les) structure(s) chimique(s) complexe(s) en solution ou en suspension dans le solvant, et au moins un additif ayant un caractère réducteur, par exemple, si les mécanismes réactionnels prévus ne conduisent pas à un caractère réducteur suffisant dans les conditions d'utilisation,
b) - mise en condition supercritique pour provoquer la transformation chimique, et
c) - retour aux conditions de pression et de température ambiantes.

Dans le cas où soit le solvant, soit la ou l'une des structures chimiques complexes que l'on souhaite transformer, présentent un caractère réducteur en conditions supercritiques, un additif réducteur spécifique n'est pas indispensable lors de la formation du fluide réactionnel. L'étape a) se résume alors à la formation d'un fluide réactionnel comportant au moins la (les) structure(s) chimique(s) complexe(s) en solution ou en suspension dans le solvant, le solvant et/ou au moins une des structures chimiques du fluide réactionnel présentant, au conditions de pression et de température supercritiques du solvant, un caractère réducteur.

Ceci est le cas d'un exemple détaillé plus loin, où on traite des boues de désencrage de papiers de journaux qui contiennent des encres présentant en condition supercritique un caractère réducteur. L'ajout d'un additif (borohydrure de sodium par exemple) peut favoriser la transformation mais n'est pas indispensable.

Il est possible aussi qu'aucune des structures chimiques, ni le solvant, initialement présents dans le milieu réactionnel ne présentent de caractère réducteur, mais qu'au moins l'un d'entre eux se dégrade en une nouvelle structure chimique qui est réductrice dans les conditions supercritiques.

L'étape a) du procédé comporte alors la formation d'un fluide réactionnel comportant la (les) structure(s) chimique(s) complexe(s) à traiter en solution ou en suspension dans le solvant, avec au moins l'une des structures chimiques complexes ou le solvant se transformant en condition supercritique en un composé présentant un caractère réducteur.

Ceci est le cas par exemple pour le traitement de la caséine qui se transforme notamment en hydrocarbures légers et en carbone.

La mise en condition supercritique consiste pour l'essentiel à augmenter la pression et la température du milieu réactionnel à des valeurs au moins supérieures à la pression critique et à la température critique du solvant.

Par ailleurs, le fluide réactionnel comporte généralement de 1 à 20% en masse de structures chimiques complexes à transformer.

Selon un aspect particulier de l'invention, la transformation réductrice peut être décrite en terme d'équivalents hydrogène nécessaires pour obtenir, lors de celle-ci, les produits finaux ciblés.

Dans ce cas, on peut déterminer en fonction du (des) produit(s) final(s) visé(s) un apport chimique en équivalent hydrogène (a.c.e.H.) nécessaire pour la transformation et on modifie la composition du milieu réactionnel pour disposer dans ce milieu d'un apport chimique en équivalent hydrogène supérieur ou égal à l'apport chimique en équivalent hydrogène résultant de la composition des réactifs (structures chimiques complexes, solvant), éventuellement au moyen d'un additif.

Le fait d'ajuster l'apport chimique en équivalent hydrogène désigné par a.c.e.H dans la suite du texte, permet non seulement d'orienter la transformation vers des produits finaux particuliers tels que $CH_4$ ou $C_2H_6$ par exemple, mais aussi d'entraver l'éventuelle corrosion des dispositifs et appareils de traitement en condition supercritique en ajustant l'a.c.e.H. à une valeur Juste supérieure à l'a.c.e.H. requis pour obtenir les produits visés.

Après le retour aux conditions de pression et de température ambiantes, les produits issus de la transformation sont séparés selon des procédés connus tels que la sédimentation, la distillation, ou encore avec une méthode membranaire.

Conformément à un mode de réalisation préféré et particulièrement avantageux de la présente invention, les présents inventeurs ont mis en évidence que le domaine supercritique du milieu ou fluide réactionnel pouvait schématiquement et globalement être divisé en au moins trois grands domaines ou zones que nous dénommerons dans ce qui suit domaine A, domaine B et enfin domaine C.

Dans le domaine supercritique du milieu ou fluide réactionnel, le domaine A est un domaine dans lequel règnent de basses températures et de hautes pression, c'est-à-dire que la pression est une pression supérieure à la pression critique du milieu ou fluide réactionnel et est la plus adaptée à la solubilisation (à la mise en solution) des produits et/ou structures chimiques complexes se trouvant dans le système ou mélange complexe ou milieu ou fluide réactionnel, tandis que la température est la température la plus basse possible qui permette de se trouver dans le domaine supercritique du système ou mélange complexe, ou milieu ou fluide réactionnel. Dans ce domaine, le fluide a une densité proche de celle de la phase liquide. La solubilité des structures chimiques complexes est donc largement facilitée dans ce domaine.

Dans le domaine supercritique du milieu ou fluide réactionnel, le domaine B est un domaine de hautes températures, c'est-à-dire que la température est une température supérieure à la température critique du milieu réactionnel et est la plus adaptée à la dégradation des produits et/ou structures chimiques complexes se trouvant dans le milieu ou fluide réactionnel, tandis que la pression est la pression la plus basse possible qui permette de se trouver dans le domaine supercritique du système ou mélange complexe ou milieu ou fluide réactionnel.

Dans ce domaine, le fluide présente une densité beaucoup plus faible. La solubilité des structures chimiques complexes est réduite, mais en revanche, les réactions de dégradation et/ou de coupure sont plus importantes.

Dans le domaine supercritique du milieu ou fluide réactionnel, le domaine C est un domaine intermédiaire où les températures et les pressions sont intermédiaires ou complémentaires de celles définies pour les domaines A et B définis ci-dessous. C'est-à-dire qu'il se produit dans ce domaine à la fois une solubilisation des structures complexes, et une dégradation de ces structures et, on peut y réaliser une optimisation entre solubilité et dégradation thermique.

Conformément à l'invention dans cette forme de réalisation préférée, on peut réaliser un pilotage de la transformation chimique complexe à travers l'un ou plusieurs de ces différents domaines afin d'obtenir des produits finaux recherchés parfaitement ciblés. En effet, il est possible de réaliser le traitement du milieu réactionnel contenant au moins une structure chimique complexe dans un seul domaine ou bien successivement dans deux, trois ou plusieurs de ces domaines, l'ordre dans lequel chacun des domaines A, B, C est traversé pouvant être différent.

Il est toutefois essentiel, selon l'invention, que l'on se situe tout au long du procédé à l'intérieur du domaine supercritique du système ou mélange complexe ou milieu ou fluide réactionnel. Autrement dit, selon l'invention, on se place constamment dans un domaine monophasique qui est exclusivement un domaine supercrititique, à la différence de l'art antérieur tel que défini par exemple par le document US-A-5 118 447 où l'on se place certes dans un domaine monophasique, mais n'excluant pas l'état liquide.

On note donc, que contrairement à la présente invention, notamment dans cette forme de réalisation préférée, le document EP-A-O 157 339 comporte une hydrogénation par l'hydrogène moléculaire et se limite spécifiquement à des bornes de station d'épuration, ce qui est restrictif par rapport aux objectifs précités.

L'utilisation d'hydrogène moléculaire et l'absence d'un choix judicieux de conditions de pression et de température dans le domaine supercritique propre à favoriser la réaction nécessitent obligatoirement dans ce document l'utilisation de catalyseurs pour l'étape d'hydrogénation. L'introduction non contrôlée d'hydrogène moléculaire peut déplacer l'équilibre monophasique du milieu supercritique en deux phases (liquide et gaz).

Au contraire, le présent procédé pilote les conditions de pression et température dans un domaine, ou suivant un cycle, dans le domaine exclusivement supercritique du fluide ou milieu réactionnel, ce qui favorise les réactions chimiques ciblées. Tout est mis en oeuvre pour utiliser tout l'hydrogène sous forme atomique disponible dans le fluide réactionnel. Si nécessaire, un apport est fait par l'intermédiaire d'additifs hydrogénés pour lesquels l'énergie de liaison entre l'hydrogène et l'atome auquel il est lié est plus faible que l'énergie de liaison entre les atomes d'hydrogène dans l'hydrogène moléculaire. L'a.c.e.H. permet de gérer cet ajout. Dans ces conditions, l'utilisation de catalyseurs n'est pas nécessaire.

De même, le document US-A-5 118 147 déjà mentionné ci-dessus décrit un procédé dans lequel on cherche à se placer dans un domaine de pressions et de températures très restreint et très proche de la limite du domaine supercritique, dans ce procédé on peut même laisser l'effluent à traiter à l'état liquide, c'est-à-dire dans un domaine subcritique.

Au contraire, le procédé selon l'invention s'impose de rester dans le domaine supercritique du fluide réactionnel et s'autorise à se déplacer largement dans ce domaine.

La nature des réactions chimiques pouvant intervenir au sein du fluide, c'est-à-dire du système ou mélange complexe se trouvant à l'état supercritique va donc dépendre :

- d'une part des paramètres P et T qui conditionnent l'aptitude pour la structure chimique complexe initiale ou de ses composants à se solubiliser et de l'énergie nécessaire pour induire la ou les réaction(s),
- d'autre part, des paramètres caractéristiques des conditions chimiques du milieu, à savoir essentiellement valeur de l'a.c.e.H. apte à contrôler l'étape de réduction, valeur du pH, etc.

Le contrôle des divers paramètres décrits ci-dessus, que ce soit d'une part les paramètres P, T et d'autre part les paramètres chimiques permet d'orienter à volonté les réactions chimiques se produisant en fonction des produits valorisables que l'on souhaite préférentiellement obtenir.

Cette flexibilité et ce pilotage du procédé permettant de maîtriser la formation des produits obtenus n'est révélée ni suggérée par les documents de l'art antérieur et constitue l'un des effets et avantages surprenants obtenus par le procédé de l'invention dans ce mode de réalisation préféré.

Par exemple, si le procédé se déroule uniquement dans le domaine A défini ci-dessus, on obtiendra préférentiellement - à la condition bien sûr que le milieu ou effluent de départ et les structures chimiques complexes qui s'y trouvent le permette - des composés tels que des hydrocarbures à chaîne longue.

Si l'on se place uniquement dans le domaine B ou si l'on effectue un cycle de réaction débutant dans le domaine A, puis se poursuivant dans le domaine B, on obtiendra plutôt des produits tels que des hydrocarbures à chaînes courtes.

Il est également possible de mettre en oeuvre un cycle de réactions commençant par la mise en solution maximale des réactifs dans le domaine A (en créant ainsi des chaînes longues), puis se poursuivant par un déplacement vers le domaine B afin de favoriser progressivement, en passant au travers du domaine C, des coupures de chaînes induites par la température.

Conformément à ce mode de réalisation préféré de l'invention et grâce au pilotage au travers des divers domaines, on obtient des temps de séjour dans le domaine supercritique du milieu réactionnel beaucoup plus courts que dans l'art antérieur, le temps de séjour est en effet la plupart du temps inférieur ou égal à 10 minutes (par exemple entre 1 et 5 minutes) et peut même atteindre une ou quelques secondes ou même encore moins (1/10 ou 1/100 de seconde). De ce fait, il se produit dans le procédé selon l'invention moins, ou quasiment pas, de réactions intermédiaires plus ou moins incontrôlables qui conduisent à des produits finaux que l'on ne souhaite pas. La chimie du procédé est, selon l'invention, parfaitement contrôlée, maîtrisée et pilotée par les paramètres indiqués ci-dessus, notamment par la température et la pression qui permettent d'ajuster et d'optimiser la vitesse de réaction.

On augmente ainsi selon l'invention la cinétique de la réaction en jouant uniquement notamment sur la température et la pression sans qu'il soit nécessaire d'ajouter un catalyseur, obligatoire dans l'art antérieur.

Si l'on agit de plus sur l'a.c.e.H par exemple en l'augmentant, grâce notamment à l'ajout d'un hydrure tel que $NaBH_4$, il est possible de procéder à une orientation supplémentaire des réactions chimiques et de diriger les réactions vers la production de produits spécifiques.

Ainsi, on pourra obtenir dans les cas cités ci-dessus, des produits à chaîne longue ou chaîne courte saturés préférentiellement aux produits insaturés.

D'autres caractéristiques et avantages de l'invention ressortiront mieux de la description des exemples et des figures annexées qui va suivre. Cette description est donnée à titre purement illustratif et non limitatif.

Brève description des figures

- la figure 1 est un diagramme illustrant de façon schématique une mise en oeuvre d'un procédé de transformation chimique conforme à l'invention,
- la figure 2 est un diagramme montrant en ordonnée la quantité de gaz (exprimée en unités arbitraires) produite lors d'une transformation chimique conforme à l'invention en fonction du temps compté à partir de la mise en condition supercritique du milieu réactionnel.

Exposé d'exemples expérimentaux de mise en oeuvre de l'invention

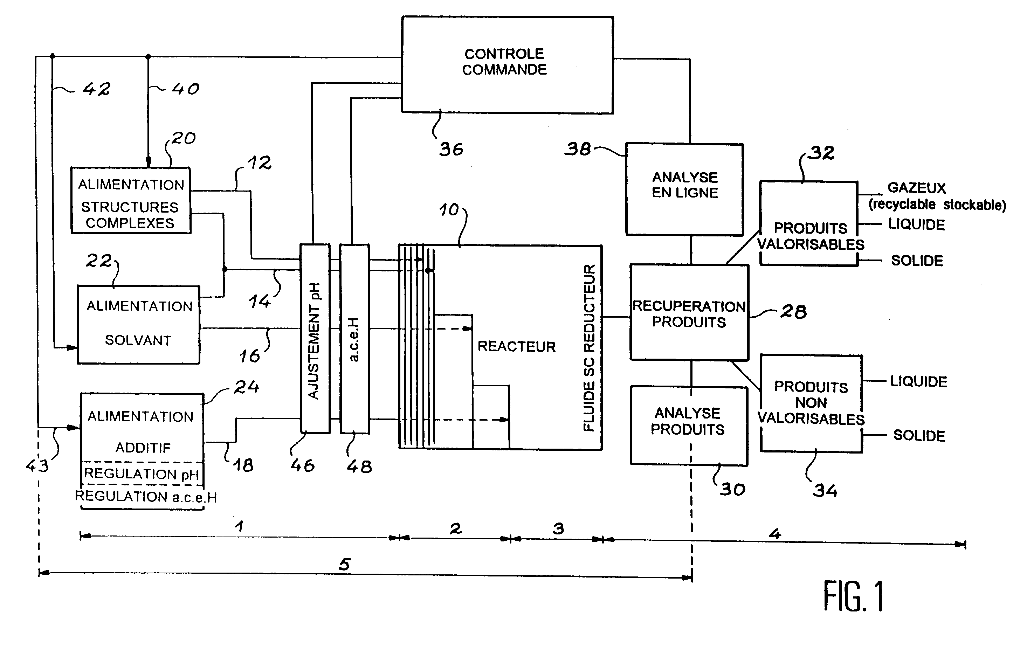

La figure 1 représente à la fois les étapes principales du procédé et leur enchaînement chronologique.

Une double flèche avec la référence 1 désigne la constitution d'un milieu réactionnel adapté à l'optimisation de la réduction (transformation) d'au moins une structure chimique complexe.

Viennent ensuite, référencé par le caractère 2, le mélange et la mise en condition du milieu réactionnel correspondant à l'état supercritique du solvant utilisé.

La double flèche 3 désigne la transformation chimique en condition supercritique avec au moins une réaction de réduction, et la double flèche 4 désigne la récupération, l'analyse et la séparation des produits de la transformation.

Un réacteur 10, est alimenté respectivement par des lignes 12, 14, 16 et 18 en une ou plusieurs structures chimiques complexes 20, un solvant 22 et éventuellement un ou plusieurs additifs 24.

La ou les structure(s) chimique(s) à transformer peuvent être mises en solution ou en suspension dans le solvant, dans le réacteur 10, ce qui correspond aux lignes 12 et 14. Il est possible également que les structures chimiques soient déjà initialement en suspension ou en solution dans une phase liquide qui constitue le solvant, ce qui correspond à la ligne 12 (et éventuellement 16) lorsque le terme de solvant est élargi à la notion de structure chimique complexe. A titre d'exemple, lorsqu'on souhaite traiter des bornes de désencrage, celles-ci comportent de la cellulose et des encres en suspension dans de l'eau. La cellulose et les encres sont ainsi les structures chimiques complexes à transformer et l'eau le solvant dont on peut contrôler la quantité. Le mélange structures chimiques-solvant est dans ce cas effectué préalablement à son introduction dans le réacteur (ligne 14).

A la sortie du réacteur 10, les références 28 et 30 désignent la récupération et l'analyse des produits de la transformation. Les produits récupérés sont ensuite séparés en produits valorisables 32 (solides, liquides ou gazeux), c'est-à-dire recyclables et stockables, et en produits non valorisables 34. Enfin, la double flèche 5 distingue le domaine du contrôle commande du procédé.

Afin d'orienter la transformation vers des produits finaux ciblés et d'optimiser les réactions souhaitées, il est possible d'ajuster la composition du mélange initial. Le contrôle de la composition, qui porte la référence générale 36 est effectué en fonction de l'analyse 38 des produits issus de la transformation.

Les flèches 40, 42, 43 désignent un ajustage initial de la composition du fluide réactionnel, c'est-à-dire du mélange structures chimiques-solvant-additif réducteur (éventuellement).

Dans le cas d'une hydrogénation, l'ajustage de la composition du fluide réactionnel est effectué en vue de disposer d'un a.c.e.H. suffisant.

Un contrôle consiste à vérifier le pH et/ou l'a.c.e.H. du fluide réactionnel. Ce contrôle porte les références 46 et 48. On peut noter à ce sujet que l'ajustage du pH et/ou l'a.c.e.H. en 46 et 48 peut avoir lieu essentiellement en agissant sur l'alimentation en additif du réacteur 10, mais il peut aussi concerner l'alimentation en structures chimiques ou en solvant. En particulier, un ou plusieurs additifs contrôlant respectivement le caractère réducteur, le pH ou l'a.c.e.H. peuvent être dosés.

A titre d'exemple, lors de la transformation d'une structure complexe de formule globale $C_xH_yO_zM_i$ et si le principal produit final visé issu de la réduction est $CH_4$, l'a.c.e.H. peut être défini comme l'apport chimique en équivalents hydrogène pour transformer tout le carbone en $CH_4$ dans les conditions de l'expérience et compte tenu des équivalents hydrogène déjà présents dans la structure complexe initiale. Cet apport chimique en équivalents hydrogène peut être par exemple défini en milligrammes d'additif réducteur par gramme de matière initiale.

Si l'on imagine que la structure complexe $C_xH_yO_zM_i$ de masse $12x+y+16z+Z_i$ (Z= masse de l'élément M) est diluée dans 10 litres de solvant (dissolution ou suspension), on peut définir l'a.c.e.H. également par rapport au volume : soit par litre de solvant.

Ainsi, pour transformer 12x grammes de carbone il faut 4x grammes d'hydrogène, mais y équivalents hydrogènes préexistant au sein de la structure complexe, l'a.c.e.H. nécessaire est (4x-y) grammes ou $(4x-y).10^3$ mg soit $(4x-y)10^2$ mg/litre. La quantité d'additif réducteur à apporter dépendra de son aptitude, par exemple, à libérer des hydrogènes (ou équivalents hydrogènes) par gramme. Elle est introduite alors au travers du contrôle de commande.

Dans le cas où le réducteur ne contient pas d'hydrogène on doit prendre en compte son aptitude à capter l'oxygène de telle manière à garder le rapport

$$\frac{C_x}{H_y}.$$

Par ailleurs, l'une des structures complexes, ou l'un des produits issus de la dégradation de l'une d'entre elles peut servir de catalyseur pour l'obtention des produits finaux ciblés.

L'influence de différents paramètres gouvernant la transformation ressort de l'exposé d'exemples expérimentaux de mise en oeuvre de l'invention qui va suivre.

EXEMPLE 1

Le tableau I, ci-après, se réfère à un premier exemple de mise en oeuvre expérimental de l'invention dans lequel environ 30 à 125ml de fluide réactionnel avec un pH égal à 7 contenant en suspension 3 à 5% en masse de boues issues d'une cellule de désencrage ayant traité des magazines (encres colorées) sont traités dans diverses conditions de pressions (30<P<90MPa) et de température (500<T<600°C) au sein d'une enceinte réactionnelle étanche de $150cm^3$. La quantité de fluide réactionnel introduite dans l'enceinte permet alors de gouverner, pour une température donnée, la pression finale selon sa valeur propre d'expansion thermique. Le tableau I donne l'évolution des conditions de solubilisation des boues en fonction des paramètres de traitement (pression P et température T). La durée de traitement (durée du palier où P et T ont des valeurs constantes) est égale à 5 minutes.

On remarque que la solubilité croît lorsque la pression diminue. La quantité de gaz produite est, par contre, trop faible pour être recueillie et analysée quelle que soit la valeur du pH (acide, neutre ou basique).

EXEMPLE 2

Dans un second exemple expérimental, on utilise 30ml d'un fluide réactionnel avec un pH égal à 7 contenant en suspension environ 3 à 5% en masse de boues de désencrage identiques à celles traitées dans l'exemple 1. On ajoute 5ml d'éthanol, pouvant, dans le domaine supercritique, induire un caractère réducteur. Après traitement dans les conditions optimales issues de l'exemple 1 (600°C, 40 MPa, pH 7, 5min), on n'observe pratiquement plus de résidu solide. En revanche, un certain nombre de gaz sont mis en évidence. Ces gaz comprennent principalement du méthane $(CH_4)$.

EXEMPLE 3

Dans un troisième exemple expérimental, 55ml d'un fluide réactionnel contenant en suspension des boues très noires, provenant de cellules de désencrage de vieux papiers de journaux (c'est-à-dire avec une encre traditionnelle fortement chargée en matières carbonées) sont placés dans une enceinte réactionnelle de 150ml environ. Les paramètres pression et température sont ajustés en fonction du rapport entre le volume de phase liquide introduit et celui de l'enceinte de réaction. En particulier lorsque la température est voisine de 600°C, la pression est de l'ordre de 60 MPa. La durée du traitement est modifiée de 3 à 30 puis à 60 minutes.

Les résultats expérimentaux de cet exemple sont résumés dans le tableau II ci-après.

De la valeur initiale 7, le pH de la solution passe après transformation à 8. En outre, un volume de gaz sensiblement voisin est recueilli après réaction dans les trois cas (3, 30 et 60 min, à 600°C et 600 bar (60MPa)).

Une analyse par chromatographie en phase gazeuse montre que le gaz formé est principalement du méthane $(CH_4)$. Il apparaît donc qu'en fonction de la nature de l'encre utilisée pour l'impression, il est possible, sans ajout d'additif réducteur, d'obtenir une source énergétique gazeuse. Le traitement peut être optimisé en ajustant les conditions de pression et de température, mais la durée de traitement n'a pas un effet déterminant.

EXEMPLE 4

De façon très similaire un quatrième exemple expérimental montre l'influence sur les résultats du pH du milieu réactionnel avant traitement.

Le tableau III ci-après résume à ce sujet les résultats d'un essai où, comme dans le troisième exemple 55ml d'un fluide réactionnel contenant en suspension des boues très noires provenant de cellules de désencrage de vieux papiers journaux sont placés dans une enceinte réactionnelle d'un volume voisin de 150ml. La quantité correspondante en matière sèche par rapport à la phase liquide est d'environ 3 à 5%. La température est gardée constante (600°C) ainsi que la durée du traitement qui est de 3 minutes. Plusieurs expériences sont réalisées à pression variable (de 60 à 100 MPa) et pour diverses valeurs du pH (4, 7, 13) sans ajout d'un additif réducteur.

On constate à la lecture des tableaux III et IV ci-après, que de faibles valeurs du pH ne facilitent pas la réduction de l'effluent en $CH_4$. En revanche, l'accroissement de pression, pour une même valeur de pH, augmente la formation de $CH_4$.

Il peut ainsi être avantageux d'ajuster le pH du milieu réactionnel à une valeur sensiblement neutre (pH≈7) avant traitement, par exemple en y ajoutant soit un additif basique tel que de la soude, soit un acide tel que chlorhydrique par exemple.

EXEMPLE 5

Un cinquième exemple de mise en oeuvre de l'invention concerne le traitement d'un effluent tel qu'un hydrocarbure.

Dans cet exemple, 30 à 125ml d'une phase liquide contenant environ 3% en masse d'huile de vidange d'automobile en suspension dans l'eau sont introduits dans une enceinte réactionnelle d'environ 150ml de volume utile. La température étant maintenue à environ 600°C, la pression peut être modulée selon la quantité de fluide réactionnel introduit dans l'enceinte.

Le tableau V ci-après précise les conditions expérimentales utilisées, ainsi que les principaux résultats observés.

La lecture du tableau V ci-après montre que l'accroissement de la pression tend à favoriser la dégradation de l'huile ainsi que la formation de gaz. Ceci résulte notamment de la comparaison des expériences $B_2$ et $B_6$. L'ajout d'un additif (borohydrure de lithium) conférant au fluide réactionnel un caractère réducteur permet aussi de réduire la pression à laquelle est effectué le traitement, comme le montre l'expérience $B_7$. Dans l'expérience $B_7$, un additif réducteur tel que le $LiBH_4$ a été ajouté dans des proportions d'environ 0,5g pour 50ml de fluide réactionnel. L'ajout de l'additif conduit aussi à une dégradation quasi-complète de l'huile et à une production de gaz plus importante.

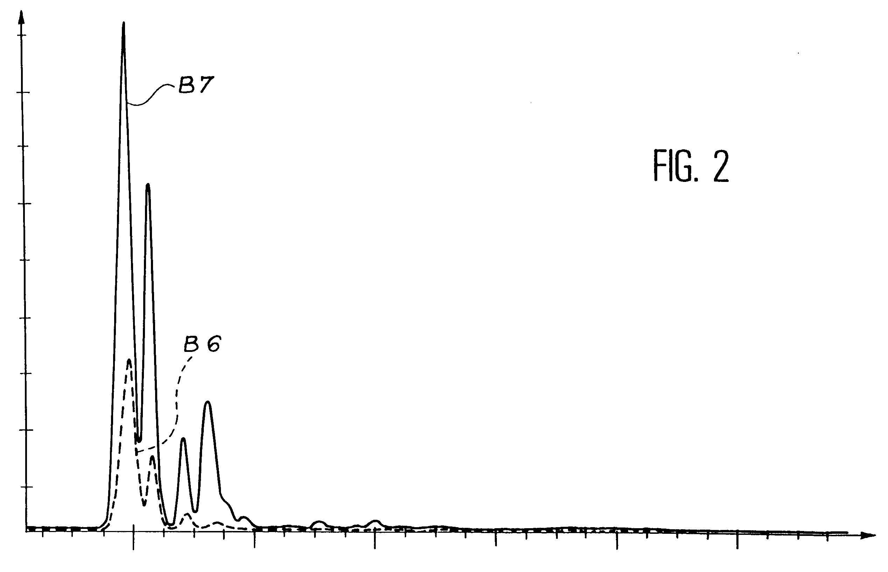

La figure 2 annexée est un diagramme obtenu par une analyse chromatographique et illustre l'influence de l'additif réducteur sur le dégagement de gaz.

Les courbes référencées $B_6$ et $B_7$ correspondent respectivement au dégagement de gaz lors des expériences $B_6$ et $B_7$.

Il apparaît que la nature des gaz est sensiblement la même, principalement pour le premier pic dû au $CH_4$, mais la quantité est fortement augmentée par l'ajout d'un agent réducteur. L'optimisation de ce dernier permet aussi de gouverner la nature et la pureté de la phase gazeuse obtenue selon le degré de réduction. Il est ainsi possible de commander par exemple la production d'hydrocarbures saturés ou insaturés lors du traitement.

EXEMPLE 6

Cet exemple concerne des bornes d'hydroxydes métalliques et montre qu'il est possible dans ce cas également d'évaluer le rôle des divers paramètres (pression, température, durée) sur leur transformation. Les résultats expérimentaux de cet exemple sont reportés dans le tableau VI ci-après. Ce tableau montre que le domaine de 600°C, 600 bar (60MPa) conduit à une dégradation importante des bornes. La masse de solide résiduelle est faible. Le temps de traitement ne joue pas un rôle déterminant. On peut noter, en outre, que la phase aqueuse résultant du traitement est incolore. Une analyse des principaux constituants contenus dans cette phase aqueuse montre qu'elle satisfait totalement aux normes de rejet dans la nature.

EXEMPLE 7

Cet exemple concerne des résidus de pressage de vendange après fermentation et montre qu'il est possible d'appliquer le procédé à ce type de structures chimiques complexes associées.

On prend 19g de ce mélange en présence de 50 $cm^3$ d'eau. L'ensemble est porté à une température de 600°C et une pression de 800 bar. Après 5 minutes de palier dans ces conditions expérimentales, le mélange est ramené dans les conditions normales (température et pression ambiantes). On observe la formation d'une phase gazeuse comprenant divers hydrocarbures, d'une phase liquide comportant plusieurs composés chimiques, notamment des dérivés terpéniques, et une phase solide constituée de carbone pulvérulent d'une masse de l'ordre de 1g.

EXEMPLE 8

Au mélange de structures chimiques complexes identique à celui traité à l'exemple 7 est ajouté 0,1g de borohydrure de sodium pour 19g de matière initiale et 50cm$^3$ d'eau. L'ensemble est traité pendant 5 minutes à une température de 600°C et une pression de 900 bar. Après retour aux conditions normales de l'ensemble, on observe un accroissement du volume de la phase gazeuse constituée d'hydrocarbures légers, montrant le rôle de l'apport chimique en équivalents hydrogène. Une phase liquide contenant du carbone en suspension est également extraite du réacteur. La masse du carbone est de l'ordre de 1g.

EXEMPLE 9

Dans un réacteur de 150cm$^3$ réalisé en alliage à base de nickel-cobalt, on introduit 50cm$^3$ d'éthanol. Le réacteur est porté à une température de 600°C. La pression atteinte est alors de l'ordre de 800 bar. La durée du traitement dans ces conditions étant maintenue à 1 minute, le réacteur est ensuite ramené dans les conditions normales. Après ouverture du réacteur, on observe la formation d'hydrocarbures légers provenant de la dégradation de l'alcool dans une partie du domaine supercritique.

EXEMPLE 10

Dans le même réacteur que celui utilisé à l'exemple 9, on introduit 125 cm$^3$ d'éthanol. Le réacteur est porté à une température de 275°C, la pression étant alors voisine de 550 bar. Ce traitement est maintenu pendant 2 minutes environ.

Après retour dans les conditions normales, puis ouverture du réacteur, on n'observe pas de phase gazeuse, et la phase liquide présente est constituée d'éthanol.

EXEMPLE 11

Cet exemple concerne une association de structures chimiques complexes de type caséine. On prend 5g de caséine en présente de 50 cm$^3$ d'eau. Le mélange est alors porté à une température de 600°C, la pression atteinte étant de l'ordre de 850 bar. Après un palier de 10 minutes, l'ensemble est ramené dans les conditions normales.

Après ouverture du réacteur, on observe la formation d'une phase gazeuse constituée d'hydrocarbures légers, d'une phase liquide contenant divers composés chimiques à chaînes courtes et du carbone très finement divisé en suspension. La masse de carbone final est de l'ordre de 0,15g.

EXEMPLE 12

Cet exemple concerne une association de structures chimiques complexes dérivée du lait et connue sous le nom de lactosérum. On prend 50 cm$^3$ de lactosérum et 0,1g de NaHB$_4$ (borohydrure de sodium). L'ensemble est porté à une température de 600°C, la pression atteinte étant de l'ordre de 750 bar. Après un tel traitement d'une durée de 15 minutes, l'ensemble est ramené dans les conditions normales.

Après ouverture du réacteur, on observe la formation d'une phase gazeuse inflammable et composée d'hydrocarbures légers, d'une phase liquide avec quelques particules carbonées en suspension.

Les exemples 13 à 15 fournis ci-après ont, sur la base de produits initiaux identiques à ceux mentionnés par le document EP-A-0 157 339 (boues biologiques), pour objectifs de tester avec et sans apport d'a.c.e.H.) leur dégradation dans les domaines A, B, C précités.

Dans les exemples 13 à 15 qui suivent, le fluide réactionnel est donc constitué d'eau à un pH de 7 avec en suspension 1 % en masse de boue biologique.

EXEMPLE 13

On se situe dans cet exemple uniquement dans le domaine A défini ci-dessus. 13a - Un volume de 32 ml de fluide réactionnel est traité à une température de 400°C et une pression de 2000 bars (200 Mpa) pendant 10 min.

Après retour aux conditions P, T normales, on observe que la boue a été majoritairement dégradée, seules substituant quelques particules solides en suspension.

Aucune phase gazeuse n'a été produite.

Après séparation et analyse, on constate que la phase liquide contient principalement des hydrocarbures entre C5 et C8.

13b - Pour un même volume de 32 ml, un traitement identique à celui décrit dans l'exemple 13a est mis en oeuvre, mais on ajoute au fluide réactionnel 0,6 g de borohydrure de sodium afin d'accroître l'a.c.e.H du milieu.

Pour une température de 400°C et une pression de 1850 bars (185 MPa), le temps de traitement est de 10 min.

Après le retour dans les conditions normales, on observe une meilleure dégradation de la boue que pour l'exemple 13a. En particulier, la quantité de particules solides a diminué par rapport à 13a. Il en ressort que l'accroissement d'a.c.e.H., lié à l'ajout de $NaBH_4$, a permis de poursuivre les réactions chimiques en phase supercritique.

Aucune phase gazeuse n'a pu être recueillie.

Après séparation et analyse de la phase liquide, on constate qu'elle contient principalement des hydrocarbures entre C5 et C8.

## EXEMPLE 14

14a - Le traitement de 54 ml du fluide réactionnel prédéterminé est effectué dans les conditions suivantes : passage dans le domaine A (P=2000 bars (200 MPa) T = 400°C pendant 10 min), puis la pression est abaissée et la température augmentée afin d'obtenir 500 bars (50 MPa) et 600°C (domaine B). Ces dernières conditions sont maintenues pendant 10 min.

Après un retour aux conditions normales, on observe la dégradation de la boue, semblant plus complète que dans les exemples 13a et 13b, ce qui est notamment indiqué par une clarification de la phase liquide et la présence de nettement moins de particules solides.

On observe également la formation d'une phase gazeuse.

La séparation et l'analyse de ces phases ont montré la présence d'hydrocarbures allant de C5 à C8 en solution et de méthane, éthylène, acétylène, éthane, propane, isobutane, au sein de la phase gazeuse.

Le méthane est majoritaire (de l'ordre de 56%), les autres constituants étant l'éthane (environ 17%), le propane (environ 12,5%) et des hydrocarbures insaturés de type éthylène ou acétylène à l'état de traces (environ 0,8%).

14b - L'addition de 0,6 g de $NaBH_4$ au fluide réactionnel conduit après traitement dans les mêmes conditions qu'en 14a à une dégradation encore plus complète de la boue, ce qui correspond à la dégradation maximale obtenue pour la série d'essais 13a, 13b, 14a, 14b (clarification de la phase liquide et disparition des particules solides).

On observe la récupération d'un volume supérieur de gaz par rapport à l'exemple 14a.

Dans cet exemple 14, comme pour l'exemple 13, l'accroissement d'a.c.e.H (lié à l'ajout de $NaBH_4$) a permis de poursuivre les réactions chimiques.

Les analyses des diverses phases ont montré la présence d'hydrocarbures de C5 à C8 dans le liquide et méthane, éthylène, acétylène, éthane, propane, butane, isobutane au sein de la phase gazeuse.

Le méthane est majoritaire et sa présence augmente de manière substantielle (71%) par rapport à 14a (56%). Le pourcentage d'éthane augmente également (environ 20%).

Il faut remarquer que la plus grande quantité de gaz recueillie peut être attribuée à une désorption et une décomposition des hydrocarbures de la phase liquide (de C5 à C8) en molécules saturées plus légères, ce phénomène étant induit par l'accroissement de l'a.c.e.H.

## EXEMPLE 15

Après passage dans le domaine A, un volume de 32 ml du milieu réactionnel avec addition de 0,6g de $NaBH_4$ est traité à une pression de 1100 bars (110 Mpa) et une température de 600°C pendant une durée de 10 minutes.

Après retour dans les conditions normales, on constate une dégradation de la boue biologique relativement moins complète que celle observée dans les exemples précédents (13a, 13b, 14a, 14b). Aucune phase gazeuse n'a pu être recueillie.

L'analyse de la phase liquide montre qu'elle contient en solution des hydrocarbures de C5 à C8.

TABLEAU I

| Réf. | pH | Conditions de traitement | | | Masse de résidu (g/l) | couleur du liquide | pH après traitement | Gaz |
|---|---|---|---|---|---|---|---|---|
| | | T(°C) | P(MPa) | temps (min) | | | | |
| A témoin | 7 | - | - | - | - | gris clair | - | - |
| A filtré | 7 | - | - | - | 4,121 | marron | - | - |
| A1 | 7 | 500 | 95 | 5 | 1,752 | jaune clair | 7-8 | traces |
| A2 | 7 | 500 | 40 | 5 | 0,613 | gris-marron | 7-8 | traces |
| A4 | 7 | 500 | 72 | 5 | 1,593 | jaune-marron | 7-8 | traces |
| A5 | 7 | 500 | 30 | 5 | 0,281 | jaune-marron | 7-8 | traces |
| A8 | 7 | 600 | 60 | 5 | traces | très clair | 7-8 | traces |
| A9 | 7 | 600 | 40 | 5 | traces | très clair | 7-8 | traces |
| A12 | 7 | 600 | 90 | 5 | traces | très clair | 7-8 | traces |
| A14 | 5 | 600 | 40 | 5 | nul | très clair | 9-10 | traces |
| A15 | 10 | 600 | 35 | 5 | traces | jaune | 9-10 | traces |

TABLEAU II

| Réf. | Conditions de traitement | | | Masse de résidu (g/l) | couleur du liquide | pH | Gaz |
|---|---|---|---|---|---|---|---|
| | T(°C) | P(MPa) | temps (min) | | | | |
| B | - | - | - | 16,2 | incolore | 7 | - |
| B-4-3-3 | 400 | 30 | 3 | 10,6 | marron, précipitation | 7 | traces |
| B-4-3-30 | 400 | 30 | 30 | 10,5 | marron, précipitation | 7 | traces |
| B-6-6-3 | 600 | 60 | 3 | 7,7 | incolore | 8 | $CH_4$ prédominant et autres alcanes |
| B-6-6-30 | 600 | 60 | 30 | 7,4 | incolore | 8 | $CH_4$ prédominant et autres alcanes |
| B-6-6-60 | 600 | 60 | 60 | 7,2 | incolore | 8 | $CH_4$ prédominant et autres alcanes |

TABLEAU III

| Réf. | pH initial | Conditions expérimentales | | | Aspect du liquide | pH final | Quantité de gaz | Analyse des gaz |
|---|---|---|---|---|---|---|---|---|
| | | T(°C) | P(MPa) | durée (min) | | | | |
| BR | 7 | 600 | 60 | 3 | clair+dépôt gris | 7-8 | ++ | $CH_4$ |
| $BR_1$ | 4 | 600 | 60 | 3 | foncé+dépôt noir | 6-7 | 0 | - |
| $BR_2$ | 4 | 600 | 100 | 3 | foncé+dépôt noir | 6-7 | + | $CH_4$ |
| $BR_{10}$ | 13 | 600 | 50 | 3 | gris clair+dépôt gris | 8 | + | $CH_4$ |

Les signes -, +, ++, +++ désignent respectivement une présence trop faible pour l'analyse d'un produit déterminé, une présence faible, une présence moyenne et une forte présence du produit.

TABLEAU IV

| pH initial | T(°C) | P(MPa) | Temps (min) | SOLUTION | GAZ . |
|---|---|---|---|---|---|
| 3-4 | 600 | 60 | 3 | Tout est solubilisé solution de couleur plus foncée que dans le cas de 600°C 600bar, pH=7 | Neant |
| 3-4 | 600 | 100 | 3 | | Quantité importante ($CH_4$,...) |
| 7 | 600 | 100 | 3 | Solution foncée avec présence d'un dépôt blanchâtre | Quantité très importante de gaz ($CH_4$,...) |

TABLEAU V

| Réf. | pH | Conditions de traitement | | | Présence d'huile | pH après traitement | Gaz |
|---|---|---|---|---|---|---|---|
| | | T(°C) | P(MPa) | temps (min) | | | |
| B1 | 7 | 600 | 60 | 5 | - | 7-8 | peu (+) |
| B2 | 7 | 600 | 45 | 5 | +++ | 7-8 | trop peu (-) |
| B6 | 7 | 600 | 110-70 | 5 | + | 7-8 | (++) |
| B7 (+$LiBH_4$) | 7 | 600 | 50 | 5 | + | 9-10 | (+++) |

Les signes -, +, ++, +++ désignent respectivement une présence trop faible pour l'analyse d'un produit déterminé, une présence faible, une présence moyenne et une forte présence du produit.

EP 0 796 143 B1

TABLEAU VI

| Réf. | Conditions de traitement | | | Masse de résidu (g/l) | couleur du liquide | pH | Gaz |
|------|------|------|------|------|------|------|------|
| | T(°C) | P(MPa) | temps (min) | | | | |
| A non traité | - | - | - | 2,27 | jaune clair | 8 | - |
| A-4-4-3 | 400 | 40 | 3 | 2,03 | incolore | 8 | traces |
| A-4-3-30 | 400 | 30 | 30 | 2,01 | incolore + | 8 | traces |
| A-6-6-3 | 600 | 60 | 3 | 1,66 | incolore ++ | 9 | Prédominance d'azote et d'oxygène |
| A-6-6-30 | 600 | 60 | 30 | 1,62 | incolore +++ | 9 | Prédominance d'azote et d'oxygène |

**Revendications**

1. Procédé de transformation chimique d'au moins un produit et/ou une structure chimique complexe en au moins un produit final, ladite transformation chimique comportant au moins une réaction de réduction dans un solvant à l'état supercritique, caractérisé en ce que l'on se situe tout au long du procédé constamment à l'intérieur du domaine exclusivement supercritique du milieu ou fluide réactionnel comportant au moins un produit et/ou une structure chimique complexe en solution ou en suspension dans le solvant, en ce que l'on réalise un pilotage de la transformation chimique à travers l'un ou plusieurs des différents domaines ou zones constituant le domaine supercritique en fonction du au moins un produit final que l'on souhaite préférentiellement obtenir, en agissant sur les conditions de température et de pression, et en contrôlant en outre les paramètres caractéristiques des conditions chimiques du milieu, et en ce que le procédé est réalisé sans apport d'hydrogène moléculaire et sans l'ajout du catalyseur allant de pair avec ledit apport d'hydrogène moléculaire.

2. Procédé selon la revendication 1, caractérisé en ce que lesdits différents domaines ou zones en lesquels est divisé le domaine supercritique sont les suivants(es) :

   - un domaine A qui est un domaine dans lequel règnent de basses températures et de hautes pressions, c'est-à-dire que la pression est une pression supérieure à la pression critique du milieu ou fluide réactionnel et est la plus adaptée à la solubilisation (à la mise en solution) des produits et/ou structures chimiques complexes se trouvant dans le milieu ou fluide réactionnel, tandis que la température est la température la plus basse possible qui permette de se trouver dans le domaine supercritique du milieu ou fluide réactionnel,
   - un domaine B qui est un domaine dans lequel règnent de hautes températures, c'est-à-dire que la température est une température supérieure à la température critique du milieu réactionnel et est la plus adaptée à la dégradation des produits et/ou structures chimiques complexes se trouvant dans le milieu ou fluide réactionnel, tandis que la pression est la pression la plus basse possible qui permette de se trouver dans le domaine supercritique du milieu ou fluide réactionnel,
   - un domaine C qui est un domaine intermédiaire dans lequel les températures et les pressions sont intermédiaires ou complémentaires de celles définies pour les domaines A et B définis ci-dessous ; c'est-à-dire qu'il se produit dans ce domaine à la fois une solubilisation des structures complexes, et une dégradation de ces structures.

3. Procédé de transformation selon la revendication 1, caractérisé en ce qu'il comporte les étapes suivantes :

   a) formation d'un milieu réactionnel comportant au moins la(les) structure(s) chimique(s) complexe(s) en solution ou en suspension dans le solvant, le solvant et/ou au moins une des structures chimiques complexes du milieu réactionnel présentant, dans les conditions de pression et de température supercritiques du solvant, un caractère réducteur,
   b) mise en condition supercritique pour provoquer la transformation chimique, et

c) retour aux conditions de pression et de température ambiantes.

4. Procédé selon la revendication 3, caractérisé en ce que au moins une des structures chimiques complexes en solution ou en suspension dans le solvant présentant un caractère réducteur, dans les conditions de pression et de température supercritiques du solvant est un additif réducteur, choisi parmi le borohydrure de sodium et tout composé susceptible d'apporter des équivalents hydrogènes.

5. Procédé selon la revendication 1, caractérisé en ce qu'au moins une étape de réduction est contrôlée en agissant sur l'apport chimique en équivalent hydrogène (a.c.e.h.).

6. Procédé de transformation selon la revendication 5, caractérisé en ce qu'on détermine, en fonction du (des) produit(s) final(aux) visé(s) l'apport chimique en équivalence hydrogène (a.c.e.h.) nécessaire pour la transformation, et on modifie la composition du milieu réactionnel pour disposer dans ce milieu d'un apport chimique en équivalent hydrogène supérieur ou égal à l'apport chimique en équivalent hydrogène résultant de la composition des réactifs (structures chimiques complexes, solvant), éventuellement au moyen d'un additif.

7. Procédé selon la revendication 1, caractérisé en ce que l'on agit sur le pH.

8. Procédé selon la revendication 7, caractérisé en ce que l'on ajuste la composition du milieu réactionnel pour obtenir un pH proche de la neutralité.

9. Procédé selon la revendication 2, caractérisé en ce que le procédé se déroule uniquement dans le domaine A.

10. Procédé selon la revendication 2, caractérisé en ce que l'on effectue un cycle de réactions débutant dans le domaine A et se poursuivant dans le domaine B.

11. Procédé selon la revendication 2, caractérisé en ce que l'on met en oeuvre un cycle de réactions commençant dans le domaine A, se poursuivant dans le domaine B et se déplaçant ensuite dans le domaine C.

12. Procédé selon la revendication 1, caractérisé en ce que le solvant est choisi parmi un alcool, l'eau, et un mélange eau-alcool.

13. Procédé selon la revendication 1, caractérisé en ce que le milieu réactionnel contient de 1 à 20% en masse de structures chimiques complexes à transformer.

14. Procédé selon la revendication 1, caractérisé en ce que le temps de séjour du milieu réactionnel dans le fluide supercritique est inférieur ou égal à 10 minutes.

15. Procédé selon la revendication 14, caractérisé en ce que le temps de séjour est de 1 à 5 minutes.

16. Procédé selon la revendication 1, caractérisé en ce que ledit produit final est un hydrocarbure.

**Claims**

1. Process for the chemical transformation of at least one product and/or one complex chemical structure into at least one end product, said chemical transformation involving at least one reduction reaction in a solvent in the supercritical state, characterized in that throughout the process there is a maintaining of an exclusively supercritical range of the reaction fluid or medium incorporating at least one product and/or complex chemical structure in solution or suspension in the solvent, in that there is a control of the chemical transformation through one or more of the different ranges or zones constituting the supercritical range as a function of the at least one end product which it is wished to obtain, by acting on the temperature and pressure conditions, and also by controlling the characteristic parameters of the chemical conditions of the medium, and in that the process is performed without molecular hydrogen supply and without adding a catalyst on a par with said molecular hydrogen supply.

2. Process according to claim 1, characterized in that said different ranges or zones into which is subdivided the supercritical range are as follows:

   - a range A in which prevail low temperatures and high pressures, i.e. the pressure exceeds the critical pressure of the reaction fluid or medium and is the best adapted to the solubilization of the products and/or complex chemical structures in the reaction fluid or medium, whilst the temperature is the lowest possible permitting maintaining in the supercritical range of the reaction fluid or medium,

- a range B, which is that in which prevail high temperatures, i.e. the temperature exceeds the critical temperature of the reaction medium and is the best adapted to the decomposition of the complex chemical structures and/or products in the reaction fluid or medium, whilst the pressure is the lowest permitting maintaining in the supercritical range of the reaction fluid or medium,

- a range C, which is an intermediate range in which the pressures and temperatures are intermediate or complimentary of those defined for ranges A and B, i.e. within this range there is both a solubilization of the complex structures and a decomposition of said structures.

3. Transformation process according to claim 1, characterized in that it involves the following stages:

a) formation of a reaction medium incorporating at least the complex chemical structure or structures in solution or suspension in the solvent, the solvent and/or at least one of the complex chemical structures of the reaction medium having, under supercritical temperature and pressure conditions of the solvent, a reducing character,

b) placing under supercritical conditions for bringing about the chemical transformation and

c) return to ambient pressure and temperature conditions.

4. Process according to claim 3, characterized in that at least one of the complex chemical structures in solution or suspension in the solvent having a reducing character under supercritical temperature and pressure conditions of the solvent is a reducing additive chosen from among sodium hydridoborate and any other compound able to supply hydrogen equivalents.

5. Process according to claim 1, characterized in that at least one reduction stage is controlled by acting on the hydrogen equivalent chemical supply.

6. Transformation process according to claim 5, characterized in that, as a function of the sought end product or products, the hydrogen equivalent chemical supply necessary for the transformation is determined and the composition of the reaction medium is modified in order to have in said medium a hydrogen equivalent chemical supply equal to or higher than the hydrogen equivalent chemical supply resulting from the composition of the reagents (complex chemical structures, solvent) optionally by means of an additive.

7. Process according to claim 1, characterized in that action takes place on the pH.

8. Process according to claim 7, characterized in that the composition of the reaction medium is adjusted in order to obtain a pH close to neutrality.

9. Process according to claim 2, characterized in that the process solely takes place in range A.

10. Process according to claim 2, characterized in that a reaction cycle takes place starting in range A and continuing in range B.

11. Process according to claim 2, characterized in that a reaction cycle is performed starting in range A, continuing in range B and then moving into range C.

12. Process according to claim 1, characterized in that the solvent is chosen among an alcohol, water and a water-alcohol mixture.

13. Process according to claim 1, characterized in that the reaction medium contains 1 to 20 wt.% complex chemical structures to be transformed.

14. Process according to claim 1, characterized in that the residence time of the reaction medium in the supercritical fluid is equal to or less than 10 minutes.

15. Process according to claim 14, characterized in that the residence time is 1 to 5 minutes.

16. Process according to claim 1, characterized in that the end product is a hydrocarbon.


**Patentansprüche**

1. Verfahren zur chemischen Umwandlung von mindestens einem Produkt und/oder einer komplexen chemischen Struktur in mindestens ein Endprodukt, wobei die chemische Umwandlung mindestens eine Reduktionsreaktion in einem Lösungsmittel im überkritischen Zustand umfaßt, **dadurch gekennzeichnet**, daß man sich während des Verfahrens beständig innerhalb des ausschließlich überkritischen Bereichs des Reaktionsmediums oder -fluids befindet, welches mindestens ein Produkt und/oder eine komplexe chemische Struktur in Lösung oder in Suspension in dem Lösungsmittel enthält, daß die chemische Umwandlung durch einen oder mehrere der verschiedenen Bereiche oder Zonen, welche den überkritischen Bereich bilden, in Abhängigkeit von mindestens einem Endprodukt geführt wird, welches man vorzugsweise zu erhalten wünscht, indem auf die Temperatur- und Druckbedingungen Einfluß genommen wird und außerdem die charakteristischen Parameter der chemischen Bedingungen des Mediums geregelt werden, und daß das Verfahren ohne Zufuhr von molekularem Wasserstoff und ohne Zugabe des mit der Zufuhr von molekularem Wasserstoff einhergehenden Katalysators ausgeführt wird.

2. Verfahren nach Anspruch 1, **dadurch gekennzeichnet**, daß es sich bei den verschiedenen Bereichen oder Zonen, in die der überkritische Bereich eingeteilt wird, um die folgenden handelt:

   - einen Bereich A, welcher ein Bereich ist, in dem niedrige Temperaturen und hohe Drücke herrschen, d.h., daß der Druck ein Druck über dem kritischen Druck des Reaktionsmediums oder -fluids ist und zur Löslichmachung (zum Auflösen) der Produkte und/oder komplexen chemischen Strukturen, die sich in dem Reaktionsmedium oder -fluid befinden, am meisten geeignet ist, während die Temperatur die tiefstmögliche Temperatur ist, welche den Aufenthalt im überkritischen Bereich des Reaktionsmediums oder -fluids gestattet,

   - einen Bereich B, welcher ein Bereich ist, in dem hohe Temperaturen herrschen, d.h. daß die Temperatur eine Temperatur über der kritischen Temperatur des Reaktionsmediums ist und für den Abbau der Produkte und/oder komplexen chemischen Strukturen, die sich in dem Reaktionsmedium oder -fluid befinden, am meisten geeignet ist, wahrend der Druck der tiefstmögliche Druck ist, welcher den Aufenthalt im überkritischen Bereich des Reaktionsmediums oder -fluids gestattet,

   - einen Bereich C, welcher ein Zwischenbereich ist, in dem die Temperaturen und Drücke zwischen den für die vorstehend definierten Bereiche A und B definierten Temperaturen und Drücken liegen oder zu diesen komplementär sind; d.h., daß in diesem Bereich sowohl eine Löslichmachung der komplexen Strukturen als auch ein Abbau dieser Strukturen stattfindet.

3. Verfahren zur Umwandlung nach Anspruch 1, **dadurch gekennzeichnet**, daß es die folgenden Schritte umfaßt:

   a) Bildung eines Reaktionsmediums, welches mindestens die komplexe(n) chemische(n) Struktur(en) in Lösung oder in Suspension in dem Lösungsmittel enthalt, wobei das Lösungsmittel und/oder mindestens eine der komplexen chemischen Strukturen des Reaktionsmediums unter den überkritischen Druck- und Temperaturbedingungen des Lösungsmittels eine reduzierende Eigenschaft aufweisen,

   b) das Herbeiführen von überkritischen Bedingungen, um die chemische Umwandlung auszulösen, und

   c) das Zurückkehren zu gewöhnlichen Druck- und Temperaturbedingungen.

4. Verfahren nach Anspruch 3, **dadurch gekennzeichnet**, daß mindestens eine der komplexen chemischen Strukturen in Lösung oder in Suspension in dem Lösungsmittel, das eine reduzierende Eigenschaft aufweist, unter den überkritischen Druck- und Temperaturbedingungen des Lösungsmittels ein reduzierender Zusatz ist, gewählt aus Natriumborhydrid und einer beliebigen Verbindung, die Wasserstoffäquivalente bereitstellen kann.

5. Verfahren nach Anspruch 1, **dadurch gekennzeichnet**, daß mindestens ein Reduktionsschritt durch Einflußnahme auf das chemische Angebot von Wasserstoffäquivalenten (a.c.e.h.) geregelt wird.

6. Verfahren zur Umwandlung nach Anspruch 5, **dadurch gekennzeichnet**, daß, in Abhängigkeit von dem (den) beabsichtigten Endprodukt(en), das für die Umwandlung erforderliche chemische Angebot von Wasserstoffäquivalenten (a.c.e.h.) bestimmt wird und die Zusammensetzung des Reaktionsmediums verändert wird, um in dem Medium ein chemisches Angebot von Wasserstoffäquivalenten bereitzustellen, das gleich oder größer als das chemische Angebot von Wasserstoffäquivalenten ist, das sich aus der Zusammensetzung der Reagenzien (komplexen chemischen Strukturen, Lösungsmittel) ergibt, gegebenenfalls mit Hilfe eines Zusatzes.

7. Verfahren nach Anspruch 1, **dadurch gekennzeichnet**, daß der pH-Wert beeinflußt wird.

8. Verfahren nach Anspruch 7, **dadurch gekennzeichnet**, daß die Zusammensetzung des Reaktionsmediums so eingestellt wird, daß ein nahezu neutraler pH-Wert erhalten wird.

9. Verfahren nach Anspruch 2, **dadurch gekennzeichnet**, daß das Verfahren ausschließlich im Bereich A abläuft.

10. Verfahren nach Anspruch 2, **dadurch gekennzeichnet**, daß ein Reaktionszyklus durchgeführt wird, welcher im Bereich A beginnt und sich im Bereich B fortsetzt.

11. Verfahren nach Anspruch 2, **dadurch gekennzeichnet**, daß ein Reaktionszyklus ausgeführt wird, der im Bereich A beginnt, sich im Bereich B fortsetzt und sich dann in den Bereich C verlagert.

12. Verfahren nach Anspruch 1, **dadurch gekennzeichnet**, daß das Lösungsmittel ausgewählt wird aus einem Alkohol, Wasser und einem Wasser-Alkohol-Gemisch.

13. Verfahren nach Anspruch 1, **dadurch gekennzeichnet**, daß das Reaktionsmedium 1 bis 20 Gew.-% komplexe chemische Strukturen zum Umwandeln enthält.

14. Verfahren nach Anspruch 1, **dadurch gekennzeichnet**, daß die Verweilzeit des Reaktionsmediums in dem überkritischen Fluid 10 Minuten oder weniger beträgt.

15. Verfahren nach Anspruch 14, **dadurch gekennzeichnet**, daß die Verweilzeit 1 bis 5 Minuten beträgt.

16. Verfahren nach Anspruch 1, **dadurch gekennzeichnet**, daß das Endprodukt ein Kohlenwasserstoff ist.

FIG. 1

FIG. 2